# FASCICULE DE BREVET EUROPEEN

(11) **EP 2 220 384 B1**
(45) Date de publication et mention de la délivrance du brevet: **16.01.2013**
(21) Numéro de dépôt: 08858143.4
(22) Date de dépôt: 21.11.2008
(51) Int. Cl.: F16B 2/24

(54) **ATTACHE ELASTIQUE POUR LA FIXATION DE DEUX PIECES L'UNE SUR L'AUTRE**
FEDERKLEMME ZUM ANEINANDERBEFESTIGEN VON ZWEI KOMPONENTEN
SPRING CLIP FOR FIXING TWO COMPONENTS TO EACH OTHER

(30) Priorité: 26.11.2007 FR 0759307
(43) Date de publication de la demande: 25.08.2010
(73) Titulaire: Attax, 78420 Carrières sur Seine (FR)
(72) Inventeur: DUBOST, Dominique, Michel, Louis, F-78170 La Celle Saint Cloud (FR)
(74) Mandataire: Blot, Philippe Robert Emile
(86) Numéro de dépôt international: PCT/FR2008/052107
(87) Numéro de publication internationale: WO 2009/071820

(56) Documents cités:
- EP-A- 1 482 184
- EP-A1- 1 557 572
- WO-A-03/100267
- US-A- 4 092 766

## Description

La présente invention concerne une attache élastique pour la fixation de deux pièces l'une sur l'autre.

De telles attaches trouvent de nombreuses applications en particulier dans l'industrie automobile pour assurer la fixation de deux pièces d'équipement d'un véhicule automobile l'une sur l'autre.

Il existe en effet dans l'état de la technique, des attaches élastiques de ce type qui présentent la forme générale d'un V ou d'un U comportant des portions intermédiaires à partir de laquelle s'étendent une ou des ailes latérales.

Cette aile ou ces ailes latérales sont alors munies de moyens formant patte externe comportant des moyens en forme de crochet élastique à franchissement de point dur, d'accrochage de l'attache sur le ou les bords d'une lumière par exemple d'une première pièce et de moyens formant patte interne munis de moyens d'accrochage de la seconde pièce afin d'assurer la fixation de cette seconde pièce sur la première.

Dans l'état de la technique, les moyens formant patte interne de l'attache s'étendent à partir de la portion intermédiaire de celle-ci, sur une partie de la hauteur des moyens formant patte externe et définissent un passage de réception de la seconde pièce.

Un exemple de réalisation d'une attache de l'état de la technique est décrit dans le document EP 1 482 184 au nom de la demanderesse.

Cependant, les attaches de ce type présentent un certain nombre d'inconvénients, notamment au niveau de leur encombrement, et du fait que dans certaines applications, la place disponible pour la fixation des deux pièces l'une sur l'autre n'est pas suffisante pour permettre l'utilisation d'une telle attache. De plus les attaches existantes ne présentent pas de garanties suffisantes quant à leur accrochage sur la pièce à fixer, présentent des difficultés de mise en place sur celle-ci et ne sont pas pourvues de moyens de détrompage garantissant que le montage de ladite attache ne puisse être effectué que dans le sens recherché.

Le document EP 1 557 572 décrit également une attache conforme au préambule de la revendication 1.

Le but de l'invention est donc de résoudre ces problèmes.

A cet effet, l'invention a pour objet une attache élastique selon la revendication 1.

Suivant des modes particuliers de réalisation, l'attache élastique comporte une ou plusieurs des caractéristiques suivantes, prise(s) isolément ou suivant toutes les combinaisons techniquement possibles :
- une zone de pliage est située dans la zone de la partie formant patte externe,
- la longueur des pattes est inférieure ou égale à la longueur de l'aile plane, prise depuis la portion intermédiaire,
- les pattes forment entre elles un petit angle ouvert vers l'extérieur donnant naissance à deux espaces, chacun entre une patte interne et la patte externe permettant le libre passage sans frottement de la patte externe pendant la fixation de la pièce sur la pièce,
- le jeu entre la plaque d'appui et l'aile plane est voisin de zéro pour éviter l'emmêlement des attaches entre elles,
- les moyens d'accrochage de l'attache sur la pièce se présentent sous forme de harpons de forme plane placés sur les rives de la plaque et/ou sur les rives de l'aile plane,
- les largeurs de la plaque et de l'extension de la portion intermédiaire sont différentes pour n'avoir qu'un seul sens de montage formant ainsi un détrompeur pour montage de l'attache sur un support issu de la seconde pièce en forme de H dissymétrique en baïonnette
- elle est pourvue d'au moins une rainure située sur la plaque ou sur l'aile plane munie ou non de moyens d'accrochage, destinés à coopérer avec les flans d'une nervure issue de la seconde pièce induisant ainsi un détrompeur pour montage de l'attache sur celle-ci,
- elle est réalisée d'une seule pièce à partir d'un flan de tôle par découpe et déformation de celui-ci.

L'invention sera mieux comprise à la lecture de la description qui va suivre, donnée uniquement à titre d'exemple et faite en se référant aux dessins annexés, sur lesquels :
- la Fig. 1 représente une vue de côté d'une attache élastique selon l'invention en position de montage et de fixation de deux pièces l'une sur l'autre ;
- la Fig. 2 représente une vue en perspective selon un premier mode de réalisation d'une telle attache ;
- la Fig. 3 représente une vue en perspective selon un deuxième mode de réalisation d'une telle attache ;
- la Fig. 4 représente un détail de l'attache illustrée sur la Fig. 3 ;
- la Fig. 5 représente une vue de dessous en perspective selon un troisième mode de réalisation d'une telle attache ;
- la Fig. 6 représente une vue en perspective où est montré le détail des formes des pattes 7a et 7b ; et
- la Fig. 7 représente une vue de côté montant l'évasement vers l'extérieur des pattes 7a et 7b.

On a en effet représenté sur ces figures, une attache élastique qui est désignée par la référence générale 1, et qui permet d'assurer la fixation de deux pièces 2 et 3 l'une sur l'autre, ces pièces étant formées par exemple par des pièces d'équipement d"un véhicule automobile.

L'une des pièces est désignée par la référence générale 3 sur ces figures, tandis que l'autre pièce est désignée par la référence générale 2.

La seconde pièce, telle que par exemple la pièce 2, comporte une lumière, désignée par la référence générale 4, dans laquelle est engagée l'attache 1. La première pièce, par exemple 3, est quant à elle accrochée sur l'attache 1

A cet effet, cette attache élastique comporte une portion en forme de pince désignée par la référence générale 5 adaptée pour être accrochée élastiquement sur un bord de la première pièce 3 et à partir de laquelle s'étendent au moins deux pattes d'accrochage désignées par les références générales 6 et 7 plus une quatrième patte désignée par la référence générale 12.

En fait, et dans les exemples de réalisation représentés, trois des pattes d'accrochage s'étendent à partir d'une branche correspondante de la pince 5, la dernière 12 s'étendant à partir de la branche opposée de la pince 5. L'une de ces pattes est une patte unique centrale désignée par la référence générale 6 qui comporte des moyens en forme de crochet élastique à franchissement de point dur désignés par la référence générale 8 sur ces figures, d'accrochage de l'attache et donc de la première pièce sur un bord de la lumière de la seconde pièce.

De chaque coté de cette patte unique centrale 6 est prévue une patte d'accrochage de l'attache sur la pièce 3.

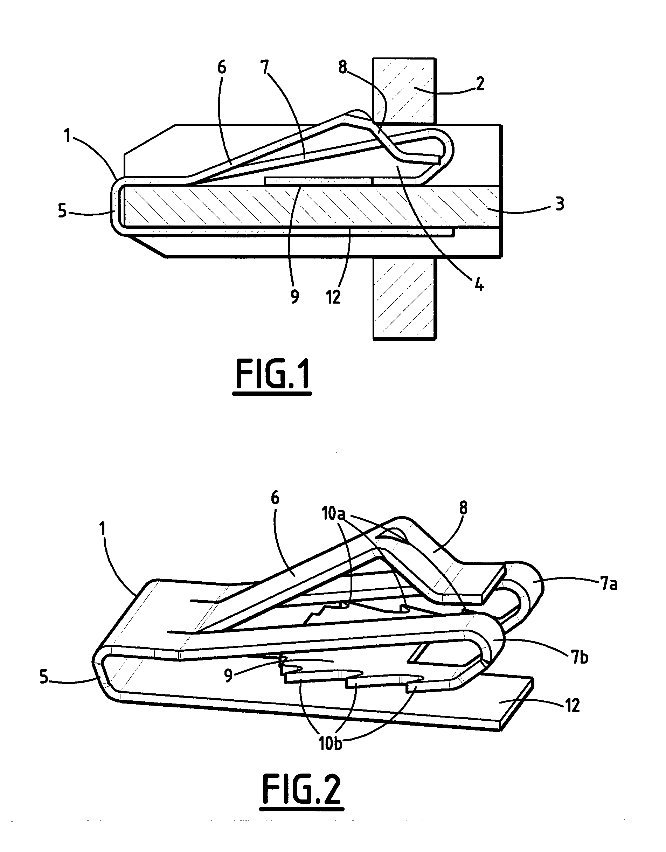

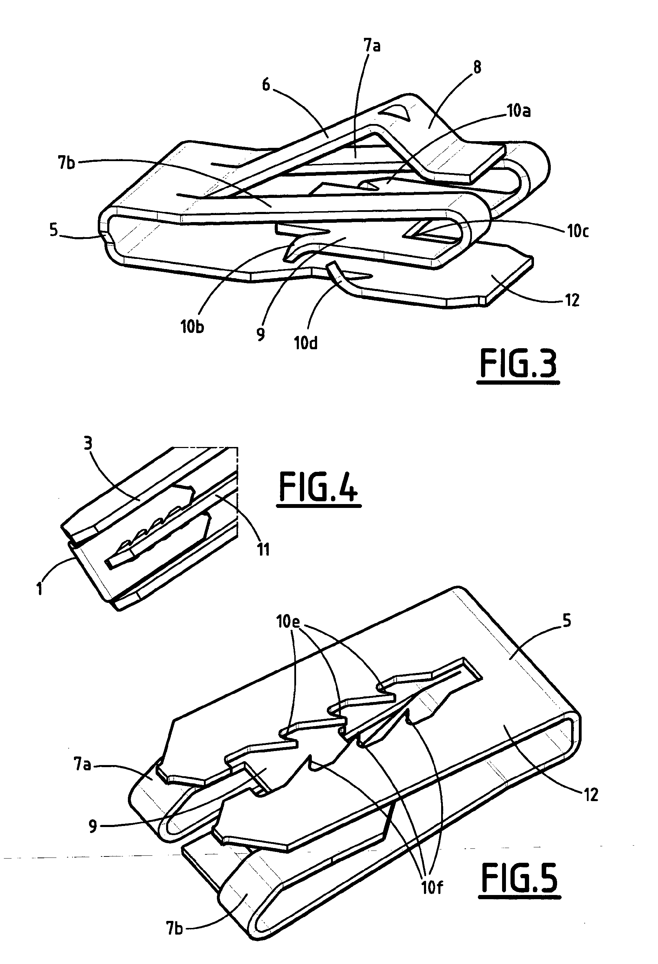

En fait et comme cela est plus visible sur les figures 2 et 3, deux pattes latérales 7a et 7b sont prévues et chacune de ces pattes comporte une portion repliée pouvant comporter des moyens d'accrochage sur la pièce 3.

En fait les extrémités repliées de ces pattes 7a et 7b sont reliées par une plaque d'accrochage désignée par la référence générale 9.

Cette plaque d'accrochage 9 peut comporter des moyens complémentaires d'accrochage, désignés par la référence générale 10a et 10b, pour assurer un blocage de l'attache.

Différents mode de réalisation de ces moyens d'accrochage peuvent être envisagés.

Ainsi, par exemple, ces moyens d'accrochage 10a et 10b peuvent être formés par des organes en forme de harpons de cette plaque d'accrochage.

Dans l'exemple de réalisation représenté sur la Figure 2, la pièce 3 présente pour le positionnement de l'attache 1, une forme générale de U ou de H, les moyens d'accrochage étant des harpons venant s'ancrer dans les deux ailes du U ou du H.

Dans l'exemple de réalisation représenté sur la Figure 3, la pièce 3 présente pour le positionnement de l'attache 1 une forme plane, les moyens d'accrochage étant des harpons venant s'ancrer en coopération avec les deux faces de la pièce 2.

Dans l'exemple de réalisation représenté sur les Figure 4 et 5, la pièce 3 présente pour le positionnement de l'attache 1 une forme générale de H, avec de plus une nervure désignée par la référence générale 11. L'accrochage de l'attache est obtenu par des moyens en forme de harpons venant s'ancrer sur les flans de ladite nervure 11.

Comme cela est illustré l'usage d'une forme en H dissymétrique, c'est-à-dire avec une ouverture différente entre la partie haute et la partie basse du H, tout comme l"accrochage sur une nervure représentée sur ces Figures, n'autorise qu'un seul sens de montage de l'attache 1 sur la première pièce 3 et sert de détrompeur pour l'opération de montage de 1 sur 3.

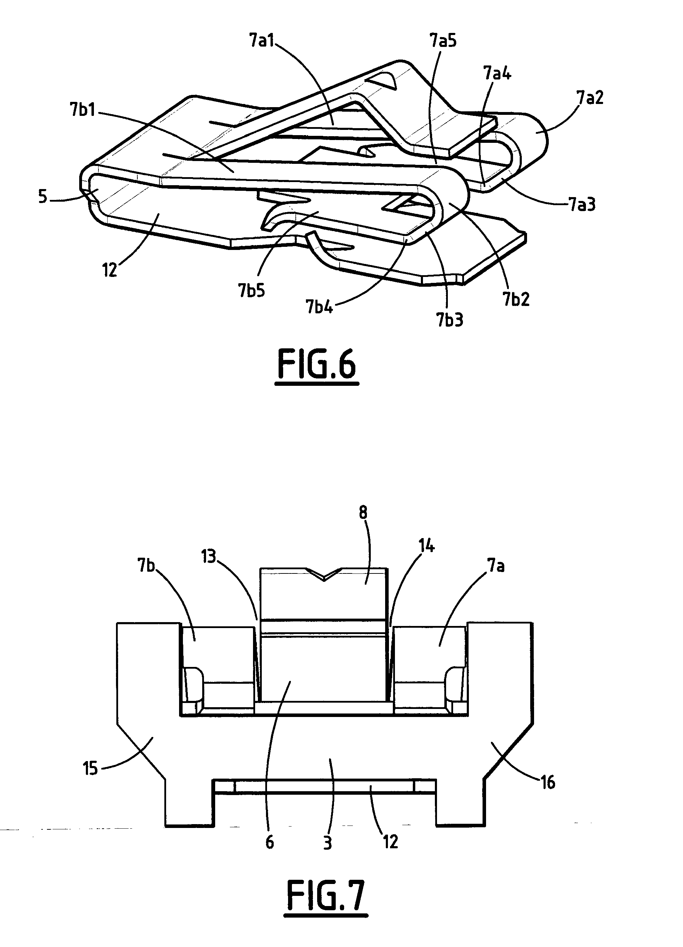

On notera également, comme cela est représenté sur les Figure 6 et 7 que les pattes 7a et 7b présentent avantageusement successivement pour chacune d'entre elles une partie plate 7a1 et 7b1, un pli 7a2 et 7b2 dont l'angle de fermeture est supérieur à 270°, une partie plate formant rampe de montage 7a3 et 7b3, un pli 7a4 et 7b4 dont l'angle de fermeture est inférieur à 180°, et une partie plate 7a5 et 7b5. Cette forme de patte permet un montage aisé et permet le déplacement parallèle de la plaque 9 par rapport à la patte 12 lors de l'insertion de l'attache 1 sur le support faisant partie intégrante de la pièce 3 assurant ainsi l'indépendance de la position de la patte centrale 6 par rapport à l'épaisseur matière de la pièce 3.

On notera également que la zone de pliage 7a2 et 7b2 des pattes 7a et 7b est située au niveau des moyens 8 en forme de crochet élastique à franchissement de point dur de l'autre patte.

Enfin on notera que pour obtenir une attache 1 de largeur minimale la patte 6 et les pattes 7a et 7b sont cisaillées, les pattes 7a et 7b étant avantageusement évasées vers l'extérieur pour laisser un passage de la partie 8 de la patte 6 nécessaire au libre débattement lors du montage de la pièce 3 sur la pièce 2.

On conçoit alors qu'une telle attache présente un certain nombre d'avantages, notamment au niveau du maintien sans jeu en position de la seconde pièce par rapport à la première, d'utiliser une telle attache lorsque l'espace disponible est réduit entre les deux pièces et les possibilités de détrompage qu'elle offre.

Bien entendu, d'autres modes de réalisations encore de cette attache peuvent être envisagés, et l'on notera que celle-ci peut être réalisée d'une seule pièce par découpe et déformation, par exemple d'un flan de tôle.

## Revendications

1. Attache élastique pour la fixation de deux pièces l'une sur l'autre, présentant la forme générale d'un « e » et comportant une portion intermédiaire (5) à partir de laquelle s'étendent, d'une part d'un côté au moins une aile latérale unique (6) munie de moyens formant patte externe (8) comportant des moyens en forme de crochet élastique à franchissement de point dur, d'accrochage de l'attache (1) sur le bord d'une lumière (4) d'une première pièce, (2) et de moyens formant pattes internes (7a, 7b) réunies par une plaque d'appui (9), d'autre part de l'autre côté une autre aile (12) de la portion intermédiaire (5), l'attache étant munie de moyens d'accrochage (10a, 10b, 10c, 10d, 10e, 10f) de la seconde pièce (3), afin de fixer cette seconde pièce (3) sur la première pièce (2), et dans laquelle :
- les moyens formant pattes internes (7a, 7b) comportent des portions (7a5, 7b5) repliées vers l'intérieur de l'attache en direction de la portion intermédiaire (5) de celle-ci,
- l'autre aile (12) est plane,
- les moyens d'accrochage (10) de la seconde pièce sont prévus soit ,sur cette aile plane (12) soit sur les portions, repliés vers l'intérieur (7a5, 7b5), au niveau de la plaque d'appui (9) soit sur les deux, et
- les pattes internes (7a, 7b) sont agencées latéralement de part et d'autre de la patte externe (8) de l'aile latérale (6)
**caractérisée en ce que** les pattes internes (7a, 7b) sont successivement composées de parties planes (7a1, 7b1), d'un pli dont l'angle est ouvert à plus de 270° (7a2, 7b2), d'une partie plane (7a3, 7b3) formant rampe de montage de l'attache (1) sur la seconde pièce (3), et d'un pli dont l'angle est ouvert à moins de 180° (7a4, 7b4).

2. Attache élastique selon la revendication 1, **caractérisée en ce que** la patte externe (8) comporte une zone de pliage.

3. Attache élastique selon la revendication 1 ou 2, **caractérisée en ce que** la longueur des pattes internes (7a, 7b), prise entre la portion intermédiaire (5) et les plis (7a2, 7b2) ouverts à plus de 270°, est inférieure ou égale à la longueur de l'aile plane (12), prise depuis la portion intermédiaire (5).

4. Attache élastique selon l'une quelconque des revendications précédentes, **caractérisée en ce que** la plaque d'appui (9) est sensiblement parallèle à l'aile plane (12).

5. Attache élastique selon la revendication 4, **caractérisée en ce qu'**un jeu voisin de zéro est défini entre la plaque d'appui (9) et l'aile plane (12) parallèles.

6. Attache élastique selon l'une quelconque des revendications précédentes, **caractérisée en ce que** les pattes internes (7a, 7b) forment entre elles un petit angle ouvert, de sorte que ces pattes internes (7a, 7b) s'écartent l'une de l'autre en donnant naissance à deux espaces (13, 14), chaque espace (13, 14) étant défini entre une patte interne (7a, 7b) respective et la patte externe (8) de façon à permettre le libre passage sans frottement de la patte externe (8) pendant la fixation de la pièce (3) sur la pièce (2).

7. Attache élastique selon l'une quelconque des revendications précédentes, **caractérisée en ce que** les moyens d'accrochage de l'attache (1) sur la seconde pièce (3) se présentent sous forme de harpons de forme plane placés sur les rives de la plaque d'appui (9) et/ou sur les rives de l'aile plane (12).

8. Attache élastique selon l'une quelconque des revendications précédentes, **caractérisée en ce que** les largeurs de la plaque d'appui (9) et de l'aile plane (12) sont différentes pour n'avoir qu'un seul sens de montage formant ainsi un détrompeur pour montage de l'attache (1) sur un support en forme de H dissymétrique (15, 16) issu de la seconde pièce (3).

9. Attache élastique selon l'une quelconque des revendications précédentes, **caractérisée en ce qu'**elle est pourvue d'au moins une rainure située sur la plaque (9) ou sur l'aile plane (12) munie ou non de moyens d'accrochage, destinés à coopérer avec les flans d'une nervure (11) issue de la seconde pièce (3) induisant ainsi un détrompeur pour montage de l'attache (1) sur celle-ci.

10. Attache élastique selon l'une quelconque des revendications précédentes, **caractérisée en ce qu'**elle est réalisée d'une seule pièce à partir d'un flan de tôle par découpe et déformation de celui-ci.

## Claims

1. Spring clip for fixing two parts to one another, having the general shape of an "e" and comprising an intermediate portion (5), from which extend, on the one hand, on one side at least a. single lateral wing (6) provided with means forming an external lug (8) comprising resilient hook-shaped means for passing a friction point to hook the clip (1) onto the edge of a slot (4) of a first part (2), and means forming internal lugs (7a, 7b) joined by a support plate (9), and on the other hand on the other side another wing (12) of the intermediate portion (5), the clip being provided with means (10a, 10b, 10c, 10d, 10e, 10f) for hooking onto the second part (3) in order to fix this second part (3) onto the first part (2), and in which:
- the means forming internal lugs (7a, 7b) have portions (7a5, 7b5) folded back towards the interior of the clip in the direction of the intermediate portion (5) thereof,
- the other wing (12) is flat,
- the hooking means (10) of the second part are disposed either on this flat wing (12) or on the portions (7a5, 7b5) folded back towards the interior on a level with the support plate (9) or on both, and
- the internal lugs (7a, 7b) are disposed laterally on either side of the external lug (8) of the lateral wing (6),
**characterised in that** the internal lugs (7a, 7b) successively comprise flat parts (7a1, 7b1), a fold, the angle of which subtends more than 270° (7a2, 7b2), a flat part (7a3; 7b3) forming a ramp for fitting the clip (1) on the second part (3) and a fold subtending an angle of less than 180° (7a4, 7b4).

2. Spring clip as claimed in claim 1, **characterised in that** the external lug (8) has a folded zone.

3. Spring clip as claimed in claim 1 or 2, **characterised in that** the length of the internal lugs (7a, 7b) between the intermediate portion (5) and the folds (7a2, 7b2) subtending more than 270° is less than or equal to the length of the slat wing (12) from the intermediate portion (5).

4. Spring clip as claimed in any one of the preceding claims, **characterised in that** the support plate (9) is substantially parallel with the flat wing (12).

5. Spring clip as claimed in claim 4, **characterised in that** a clearance close to zero is defined between the parallel support plate (9) and flat wing (12).

6. Spring clip as claimed in any one of the preceding claims, **characterised in that** the internal lugs (7a, 7b) subtend a small open angle between them so that these internal lugs (7a, 7b) sit apart from one another giving rise to two gaps (13, 14), each gap (13, 14) being defined between a respective internal lug 17a, 7b) and the external lug (8) so as to allow a free passage without rubbing the external lug (8) when fixing the part (3) to the part (2).

7. Spring clip as claimed in any one of the preceding claims, **characterised in that** the means for hooking the clip (1) onto the second part (3) comprise harpoons of a flat shape disposed on the edge of the support plate (9) and/or on the edges of the flat wing (12).

8. Spring clip as claimed in any one of the preceding claims, **characterised in that** the widths of the support plate (9) and the flat wing (12) are different so that there is only one fitting direction, thus forming a locating-means for fitting the clip (1) onto a dissymmetrical H-shaped support (15, 16) of the second part (3).

9. Spring clip as claimed in any one of the preceding claims, **characterised in that** it is provided with at least one groove disposed on the plate (9) or on the flat wing (12), which may or may not be provided with hooking means, designed to co-operate with the fins of a rib (11) of the second part (3), thereby forming a locating means for fitting the clip (1) thereof.

10. Spring clip has claimed in any one of the preceding claims, **characterised in that** it is made as a single piece from a sheet metal blank by cutting and deforming the latter.

## Patentansprüche

1. Federklemme zum Befestigen von zwei Teilen aneinander, welche die allgemeine Form eines "e" ausweist und einen Zwischenabschnitt (5) aufweist, ausgehend von dem sich, einerseits, auf der einen Seite, mindestens ein einziger seitlicher Flügel (6) erstreckt, der mit Mitteln versehen ist, die eine äußere Klaue (8) mit hakenförmigen elastischen Druckpunktüberwindungsmitteln bilden zum Einhängen der Klemme (1) an dem Rand eines Schlitzes (4) eines ersten Teils (2), und mit Mitteln, die innere Klauen (7a, 7b) bilden, die durch eine Abstützplatte (9) verbanden sind, und andererseits, auf der anderen Seite, ein anderer Flügel (12) des Zwischenabschnitts (5) erstreckt, wobei die Klemme mit Mitteln (10a, 10b, 10c, 10d, 10e, 10f) zum Einhängen des zweiten Teils (3) versehen ist, um dieses zweite Teil (3) an dem ersten Teil (2) zu befestigen, und wobei:
- die Mittel, die innere Klauen (7a, 7b) bilden, Abschnitte (7a5, 7b5) aufweisen, die in das Innere der Klemme in Richtung von deren Zwischenabschnitt (5) umgebogen sind,
- der andere Flügel (12) eben ist,
- die Mittel (10) zum Einhängen des zweiten Teils entweder an diesem ebenen Flügel (12) oder an den nach innen umgebogenen Abschnitten (7a5, 7b5) im Bereich der Abstützplatte (9) oder an beiden vorgesehen sind und
- die inneren Klauen (7a, 7b) seitlich beiderseits der äußeren Klaue (8) des seitlichen Flügels (6) eingerichtet sind,
**dadurch gekennzeichnet, dass** die inneren Klauen (7a, 7b) nacheinander aus ebenen Teilen (7a1, 7b1) , einer Beuge (7a2, 7b2), deren Winkel um mehr als 270° geöffnet ist, einem ebenen Teil (7a3, 7b3), das eine Rampe für die Montage der Klemme (1) an dem zweiten Teil (3) bildet, und einer Beuge (7a4, 7b4), deren Winkel µm weniger als 180° geöffnet ist, besteht.

2. Federklemme nach Anspruch 1, **dadurch gekennzeichnet, dass** die äußere Klaue (8) eine Biegungszone aufweist.

3. Federklemme nach Anspruch 1 oder 2, **dadurch gekennzeichnet, dass** die Länge der inneren Klauen (7a, 7b), zwischen dem Zwischenabschnitt. (5) und den um mehr als 270° geöffneten Beugen (7a2, 7b2) gemessen, kleiner oder gleich der Länge des ebenen Flügels 12), von dem Zwischenabschnitt: (5) aus gemessen, ist.

4. Federklemme nach einem der vorhergehenden Ansprüche, **dadurch gekennzeichnet, dass** die Abstützplatte (9) im Wesentlichen zu dem ebenen Flügel (12) parallel ist.

5. Federklemme nach Anspruch 4, **dadurch gekennzeichnet, dass** ein Spiel von nahe Null zwischen der parallelen Abstützplatte (9) und dem parallelen ebenen Flügel (12) festgelegt ist.

6. Federklemme nach einem der vorhergehenden Ansprüche, **dadurch gekennzeichnet, dass** die inneren Klauen (7a, 7b) zwischen einander einen kleinen offenen Winkel bilden, so dass diese inneren Klauen (7a, 7b) sich voneinander abspreizen, indem sie das Entstehen von zwei Zwischenräumen (13, 14) bewirken, wobei jeder Zwischenraum (13, 14) zwischen einer jeweiligen inneren Klaue (7a, 7b) und der äußeren Klaue (8) festgelegt ist, derart, dass er den freien reibungsfreien Durchtritt der äußeren Klaue (8) während der Befestigung des Teils (3) an dem Teil (2) zulässt.

7. Federklemme nach einem der vorhergehenden Ansprüche, **dadurch gekennzeichnet, dass** die Mittel für das Eingängen der Klemme (1) an dem zweiten Teil (3) die Form von Harpunen mit flacher Form aufweisen, die an den Kanten der Abstützplatte (9) und/oder an den Kanten des ebenen Flügels (12) angeordnet sind.

8. Federklemme nach einem der vorhergehenden Ansprüche, **dadurch gekennzeichnet, dass** die Breite der Abstützplatte (9) und die Breite des ebenen Flügels (12) sich darin unterscheiden, dass sie nur eine einzige Montagerichtung haben, wodurch sie eine Unverwechselbarkeitseinrichtung für die Montage der Klemme (1) an einem Träger in Form eines asymmetrischen H (15, 16), der aus dem zweiten Teil (3) hervorgegangen ist, bilden.

9. Federklemme nach einem der vorhergehenden Ansprüche, **dadurch gekennzeichnet, dass** sie mit mindestens einer Nut versehen ist, die an der Platte (9) oder an dem ebenen Flügel (12) befindlich ist, die mit Einhängemitteln oder nicht mit Einhängemitteln versehen ist, die für das Zusammenwirken mit Ausschnitten einer Rippe (11), die aus dem zweiten Teil (3) hervorgegangen ist, bestimmt sind, wodurch sie eine Unverwechselbarkeitseinrichtung für die Montage der Klemme (1) an diesem bewirken.

10. Federklemme nach einem der vorhergehenden Ansprüche, **dadurch gekennzeichnet, dass** sie einstückig aus einem Blechausschnitt durch Ausschneiden und Verformen von diesem realisiert ist.
